# EUROPÄISCHE PATENTSCHRIFT

(11) **EP 4 042 004 B1**
(45) Veröffentlichungstag und Bekanntmachung des Hinweises auf die Patenterteilung: **11.09.2024**
(21) Anmeldenummer: 20793262.5
(22) Anmeldetag: 05.10.2020
(51) Int. Cl.: F02B 67/06, F01P 5/02, F16H 7/10

(54) **BRENNKRAFTMASCHINE MIT EINEM ZYLINDERKURBELGEHÄUSE UND EINEM ZYLINDERKOPF MIT INTEGRIERTEM HÖHENVERSTELLBAREM LÜFTERANBAU FÜR ELASTISCHE KEILRIPPENRIEMEN**
INTERNAL COMBUSTION ENGINE WITH A CYLINDER CRANKCASE AND A CYLINDER HEAD WITH INTEGRATED HEIGHT-ADJUSTABLE FAN ATTACHMENT FOR ELASTIC V-RIBBED BELTS
MOTEUR À COMBUSTION INTERNE DOTÉ DE CARTER DE CYLINDRE ET DE CULASSE DE CYLINDRE À FIXATION DE VENTILATEUR RÉGLABLE EN HAUTEUR INTÉGRÉE POUR DES COURROIES À NERVURES EN V ÉLASTIQUES

(30) Priorität: 09.10.2019 DE 102019007007
(43) Veröffentlichungstag der Anmeldung: 17.08.2022
(73) Patentinhaber: DEUTZ Aktiengesellschaft, 51149 Köln (DE)
(72) Erfinder: SLIWA, Marco, 53721 Siegburg (DE); KLOSTERBERG, Johannes, 53913 Swisttal (DE)
(86) Internationale Anmeldenummer: PCT/EP2020/000170
(87) Internationale Veröffentlichungsnummer: WO 2021/069089

(56) Entgegenhaltungen:
- DE-A1- 10 317 507
- DE-A1- 2 113 533
- US-A- 1 639 449
- US-A- 2 526 242

## Beschreibung

Die Erfindung betrifft eine Brennkraftmaschine mit einem Zylinderkurbelgehäuse und einem Zylinderkopf mit integriertem höhenverstellbarem Lüfteranbau für elastische Keilrippenriemen.

Derartige Brennkraftmaschinen sind z. B. bekannt aus der der JP-A2008-31937 oder der japanischen ungeprüften Patentveröffentlichung JPA2001-220771.

In der japanischen ungeprüften Patentveröffentlichung JP-A2008-31937 ist eine Erfindung offenbart, in der relativ zu einem Motor auf einer Seite in einer waagrechten Richtung senkrecht zu einer Wellenmitte einer Ausgangswelle des Motors ein Kompressor angeordnet ist, während auf der anderen Seite eine Lichtmaschine angeordnet ist.

In der japanischen ungeprüften Patentveröffentlichung JP-A2001-220771 ist eine Erfindung offenbart, bei der auf einer Oberseite eines Motors eine Lichtmaschine und ein Kompressor nebeneinander in einer Wellenmittenrichtung einer Ausgangswelle des Motors angeordnet sind, und auch eine Erfindung offenbart, bei der auf einer Oberseite eines Motors eine Lichtmaschine und ein Kompressor nebeneinander in einer waagrechten Richtung senkrecht zu einer Wellenmitte des Motors angeordnet sind.

Aus der DE 21 13 533 A1 ist eine Brennkraftmaschine mit einem Lüfter bekannt, der auf einer Kühlpumpe befestigt ist. Die Kühlpumpe ist an der Stirnseite eines Zylinderblocks der Brennkraftmaschine verschraubt. Hierzu ragen vier Befestigungsschrauben jeweils durch ein Langloch der Kühlpumpe. Die Langlöcher sind dabei parallel ausgerichtet, sodass sich die Kühlpumpe zusammen mit dem Lüfter in Richtung dieser Langlöcher positionieren lässt.

Aus der US 2 526 242 A ist eine Brennkraftmaschine mit einem Lüfter bekannt, der an einer Riemenscheibe befestigt ist. Die Riemenscheibe ist auf einer Achse gelagert, die einen Exzenterabsatz aufweist. Eine Halterung ist an der Brennkraftmaschine befestigt und umfasst ein Langloch und ein gabelförmiges Element. Der Exzenterabsatz erstreckt sich durch das Langloch und das gabelförmige Element. Durch Verdrehen des gabelförmigen Elements kann die Position der Riemenscheibe innerhalb des Langlochs eingestellt werden.

Aus der US 1 639 449 A ist eine Brennkraftmaschine mit einem Lüfter bekannt. Die Brennkraftmaschine weist eine Abdeckung auf, die an einem Zylinderblock befestigt ist. In die Abdeckung ist eine Buchse integriert, in der ein Federelement aufgenommen ist. Der Lüfter ist federnd auf dem Federelement gelagert, um eine Spannung des den Lüfter antreibenden Riemens aufrecht zu erhalten.

In der Offenlegungsschrift EP 0 884 210 A2 wird eine Vorrichtung zum Antreiben von Aggregaten einer Brennkraftmaschine, wie Kühlmittelpumpe und Lüfter, über einen von einer Kurbelwelle aus antreibbaren ersten Riementrieb durch eine mit der Kurbelwelle verbundene erste Riemenscheibe vorgeschlagen. Hierbei steht die erste Riemenscheibe mit einer mit einer Kühlmittelpumpenwelle verbundenen zweiten Riemenscheibe über einen Riemen in einer Antriebsverbindung. Mit der Kühlmittelpumpenwelle ist eine dritte Riemenscheibe verbunden. Die dritte Riemenscheibe bildet mit einer vierten Riemenscheibe, die auf der Kurbelwelle oder einer Verlängerung der Kurbelwelle drehbar gegenüber der Kurbelwelle gelagert ist, einen zweiten Riemenantrieb. Der Lüfter steht mit der vierten Riemenscheibe in Antriebsverbindung. Hierdurch kann eine Übersetzung ins Schnelle für den Lüfterantrieb realisiert werden, erfordert jedoch das Vorsehen einer zusätzlichen Riemenscheibe an der Kühlmittelpumpenwelle, was aufgrund der zusätzlichen Belastungen mit einem erhöhten Risiko von Undichtheiten einhergeht und ferner aus bauraumtechnischen Gründen oft hohe Realisierungsaufwände erfordert. Ein weiterer Nachteil sind die resultierenden zusätzlichen Lagerbelastungen der Nebenaggregate und ggf. die Erfordernis, diese neu auslegen zu müssen.

Die DE 23 18 104 offenbart einen Lüfterantrieb, bei dem der Lüfter über einen in Abhängigkeit von der Motordrehzahl angetriebenen Keilriementrieb und eine Schlupfkupplung angetrieben wird, wobei drehfest mit der Keilriemenscheibe das antreibende Teil der Schlupfkupplung verbunden ist und die Keilriemenscheibe sowie das antreibende Teil der Schlupfkupplung über eine Lagerung relativ verdrehbar und koaxial zu einer Welle vorgesehen sind, auf der das angetriebene Teil der Schlupfkupplung sowie der Lüfter drehschlüssig angelenkt sind. Nachteilig hieran sind wieder die resultierenden zusätzlichen Lagerbelastungen der Nebenaggregate durch die gemeinsame Welle, auch wenn diese drehzahlentkoppelt ist. Ferner ist eine Schlupfkupplung erforderlich.

In der DE 103 24 314 A1 wird ein Lüfterantrieb vorgeschlagen, der durch einen Verbrennungsmotor eines Kraftfahrzeuges antreibbar ist, mittels einer Flüssigkeitsreibungskupplung und mit Mitteln zur Erhöhung der Lüfterdrehzahl. Hierbei ist der Lüfter koaxial zur Kurbelwelle des Verbrennungsmotors angeordnet. Achsparallel zur Kurbelwelle sind Nebenaggregate vorsehbar, die über einen gemeinsamen ersten Riementrieb mit einer Übersetzung ins Schnelle vom Verbrennungsmotor antreibbar sind. Hierbei ist der Lüfter über einen ersten Antriebsstrang, in den die Flüssigkeitsreibungskupplung, bestehend aus Antriebswelle, Antriebsscheibe und Gehäuse, sowie ein Freilauf geschaltet sind, direkt von der Kurbelwelle und alternativ - zur Erhöhung der Lüfterdrehzahl - über einen zweiten Antriebsstrang antreibbar, der einen zweiten Riementrieb von einem Nebenaggregat auf die Flüssigkeitsreibungskupplung umfasst und über eine Schaltkupplung zu- oder abschaltbar ist. Nachteilig an dieser Lösung sind der komplexe Aufbau und die resultierenden vergleichsweise hohen Bauteilkosten zur Realisierung des Lüfterantriebs, da beispielsweise eine Schlupfkupplung und ein Freilaufelement erforderlich sind.

Bei der Entwicklung von Brennkraftmaschinen wird auf die Kompaktheit dieser Motoren geachtet. Insbesondere die Länge des Motors ist entscheidend, um die Geräte, in die dieser Motor eingebaut werden soll, kompakt zu halten. Ein Kriterium für die Motorlänge ist das Zylinderkurbelgehäuse und der Zylinderkopf mit deren Lüfteranbau. Bekannte Konstruktionen zeigen höhenverstellbare Lüfterkonsolen, die vor bzw. an das Zylinderkurbelgehäuse und/oder vor bzw. an den Zylinderkopf geschraubt werden. Die Konsolen nehmen teilweise Spannelemente für den Keilrippenriemen auf. Alternativ werden Spannelemente für den Keilrippenriemen auf dem Zylinderkurbelgehäuse oder/und dem Zylinderkopf befestigt. Auf den Lüfterkonsolen sind die Lüfteranbauten befestigt. Die Lüfteranbauten nehmen den Lüfter inkl. Riemenscheibe und Lüfterlagerung auf. Dies erfordert einen ausreichend großen Bauraum.

Es ist somit eine Aufgabe der Erfindung, die aus dem Stand der Technik bekannten Ansätze unter Vermeidung der vorstehend beschriebenen Nachteile weiterzubilden. Es ist insbesondere eine Aufgabe der Erfindung, einen Lüfterantrieb bereitzustellen, der kostengünstig, komponentenschonend und mit geringem Bauraumbedarf realisierbar ist und Fertigung und Montage verbessert.

Diese Aufgaben werden durch Vorrichtungen mit den Merkmalen des unabhängigen Anspruchs gelöst. Vorteilhafte Ausführungsformen und Anwendungen der Erfindung ergeben sich aus den abhängigen Ansprüchen und werden in der folgenden Beschreibung unter teilweiser Bezugnahme auf die Fig. näher erläutert. Es zeigen:
- Fig. 1:: Brennkraftmaschine mit Lüfteranbauten wie Lüfter, Riemenscheibe und Lüfterlagerung,
- Fig. 2:: die Stirnseite der Brennkraftmaschine aus Fig. 1 mit Blick auf den Lüfter,
- Fig. 3:: Brennkraftmaschine ohne Lüfteranbauten und demontierter Lüfterlagerung,
- Fig. 4:: Draufsicht auf die Stirnseite der Brennkraftmaschine mit Lüfterlagerung.

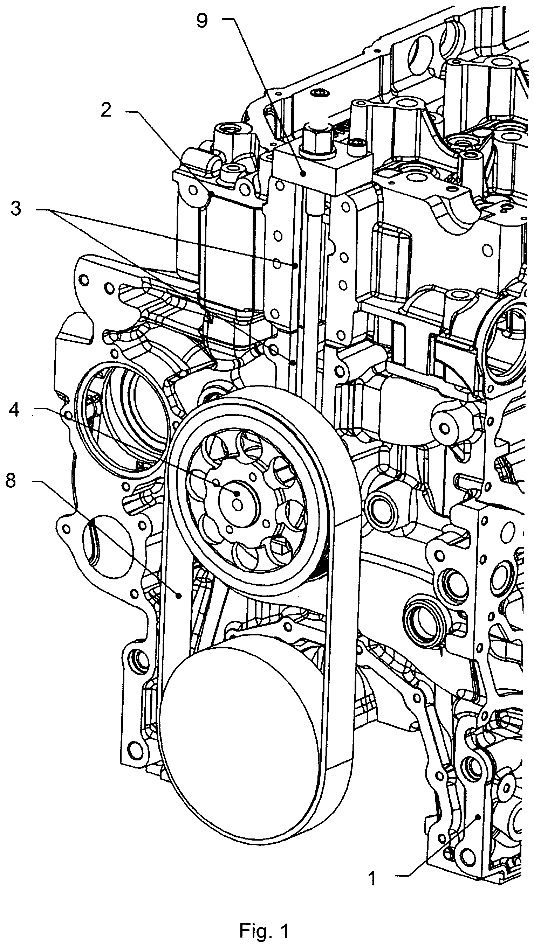

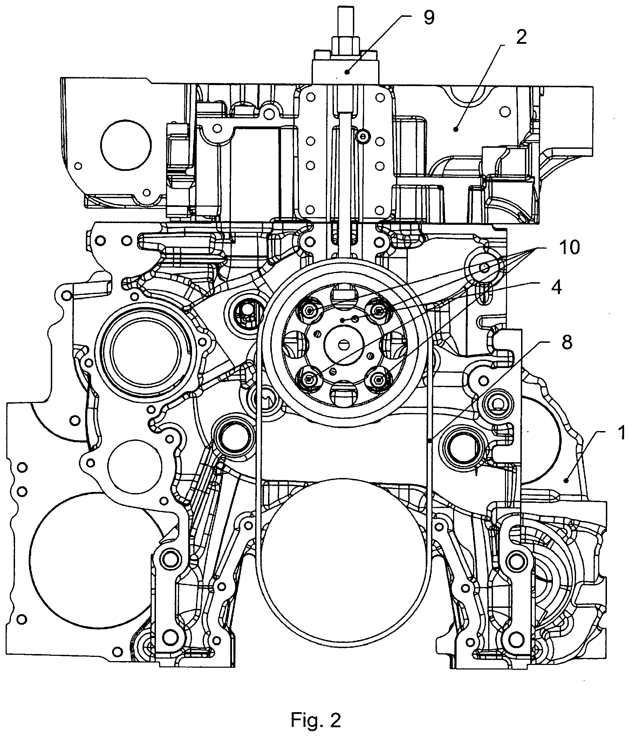

In Fig. 1 und 2 wird eine Brennkraftmaschine mit Lüfteranbauten wie Lüfter, Riemenscheiben und Lüfterlagerung 5 dargestellt, die die Baulänge des Motors erkennbar reduziert. Dies wird erreicht, indem man die höhenverstellbare Lüfterkonsole 3 in das Zylinderkurbelgehäuse 1 und den Zylinderkopf 2 integriert. Die Lüfteranbauten inkl. Lüfter, Riemenscheiben und Lüfterlagerung 5 werden dann direkt auf das Zylinderkurbelgehäuse 1 und / oder den Zylinderkopf 2 befestigt. Die Lüfterlagerung 5 läuft in zwei innen liegenden Führungsnuten in der Art einer T-Nut-Mutter bzw. einem T-Nut-Stein 11 - auch Nutenstein - ein Gewindeloch bzw. im vorliegenden Fall vier Gewindelöcher sind zur Aufnahme der Schrauben 10 in der Lüfterlagerung 5 angeordnet. Ein solcher Stein dient beispielsweise zur Verbindung zwischen Maschinentisch und Werkstück bei einer Werkzeugmaschine. Er befindet sich axial verschiebbar in einer T-Nut des Tisches bzw. hier in der Führungsnut 6, die im Zylinderkurbelgehäuse 1 und/oder im Zylinderkopf 2 angeordnet ist. Mit ihm wird eine Anschraubstelle mittels entsprechender spezieller Schraube für das Werkstück geschaffen und kann in der Höhe innerhalb eines vorgegebenen Lochstichs 7 verstellt werden. Die Vorspannung eines elastischen Keilrippenriemens 8 wird erreicht, indem man die Lüfteranbauten inkl. Lüfter, Riemenscheiben und Lüfterlagerung 5 mit einem Montage-Spann-Werkzeug 9 in die gewünschte Position bringt und anschließend mit dem Zylinderkurbelgehäuse 1 und / oder dem Zylinderkopf 2 mittels Schrauben 10 verschraubt. Das Montage-/Spann-Werkzeug 9, das aus einem Widerlager besteht, das oberhalb der Führungsnut 6 mit dem Zylinderkopf 2 verschraubt werden kann und das eine Führungsbohrung zur Aufnahme einer Zahnstange aufweist, die in einem Gewinde im Nutenstein 11 verschraubt ist, ist abnehmbar angeordnet. Am Widerlager ist auf der Zahnstange eine Mutter angeordnet, mittels der die Zahnstange die Lüfterlagerung 5 in der Höhe verstellen kann. Das Montage-Spann-Werkzeug 9 kann, nachdem die Lüfterlagerung 5 mittels der Schrauben 10 in ihrer Arbeitsposition fixiert wurde, entfernt werden.

Alternativ ist vorgesehen, dass die vier Durchgangsbohrungen zur Aufnahme der Schrauben 10 am Nutenstein 11 Gewinde aufweisen, so dass der Nutenstein 11 mittels der Schrauben 10 gegen die Führungsnuten 6 verspannt werden, so dass die Lüfterlagerung 5 in der Höhe variabel angeordnet werden kann.

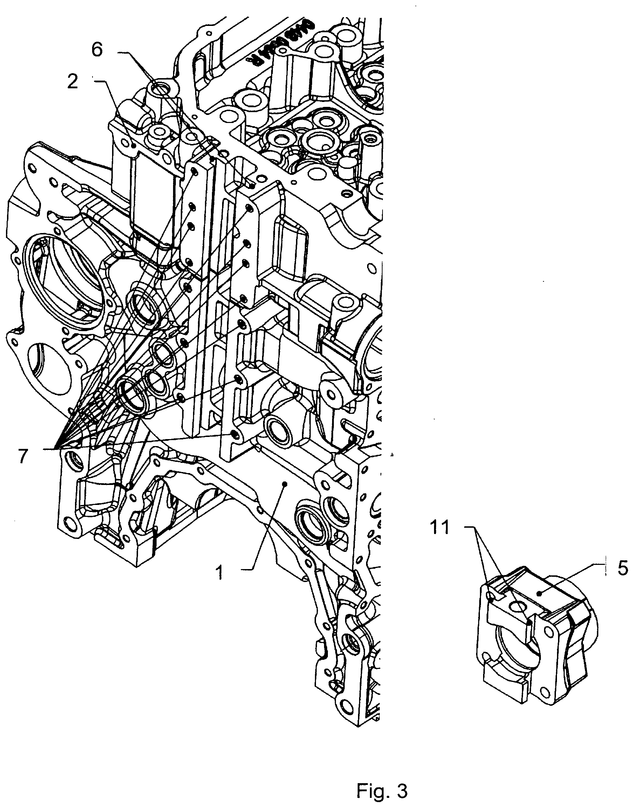

In Fig. 3 wird die Brennkraftmaschine aus den Fig. 1 und 2 mit demontierter Lüfterlagerung 5 dargestellt. Die Rückseite der Lüfterlagerung 5 ist wie ein Nutenstein 11 ausgeführt. Mittels dieses Nutensteins 11 wird die Lüfterlagerung in den Führungsnuten 6 von Zylinderkopf 2 und Zylinderkurbelgehäuse 1 geführt und mit den Schrauben 10 in den Gewinden des Lochstichs 7 in der Arbeitsposition fixiert.

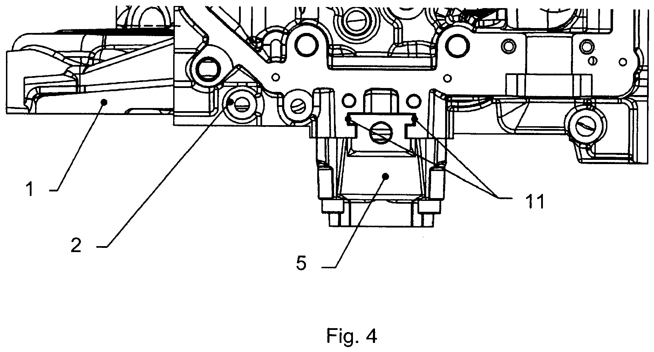

Fig. 4 zeigt eine Draufsicht auf die Stirnseite der Brennkraftmaschine mit der Lüfterlagerung 5. Hier ist die Anordnung des Nutensteins 11 der Lüfterlagerung 5 in den Führungsnuten 6, die im Zylinderkopf 2 und dem Zylinderkurbelgehäuse 1 eingearbeitet sind, zu sehen.

### Bezugszeichenliste

- 1: Zylinderkurbelgehäuse
- 2: Zylinderkopf
- 3: Lüfterkonsole
- 5: Lüfterlagerung
- 6: Führungsnuten
- 7: vorgegebener Lochstich
- 8: Keilrippenriemen
- 9: Montage- /Spann-Werkzeug
- 10: Schrauben
- 11: T-Nutenstein/ -mutter

## Patentansprüche

1. Brennkraftmaschine, umfassend:
ein Zylinderkurbelgehäuse (1);
einen Zylinderkopf (2);
wenigstens eine Vorrichtung zum Antreiben eines Lüfters, insbesondere eines Fahrzeugs, insbesondere eines Nutzfahrzeugs, über die der Lüfter gegenüber einer Kurbelwelle der Brennkraftmaschine verschiebbar angeordnet ist,
wobei die Vorrichtung zum Antreiben eines Lüfters eine Lüfterkonsole (3) und eine Lüfterlagerung (5) umfasst; und
einen Riementrieb, über den der Lüfter antreibbar ist, wobei der Riementrieb eine erste Riemenscheibe und eine zweite Riemenscheibe, die über einen Riemen (8) in einer Antriebsverbindung stehen, aufweist und die erste Riemenscheibe auf der Lüfterlagerung (5) angeordnet ist,
**dadurch gekennzeichnet, dass** die Lüfterlagerung (5) als T-Nut-Stein ausgestaltet ist, der sich axial verschiebbar in einer Führungsnut (6) befindet, die im Zylinderkurbelgehäuse (1) und/oder im Zylinderkopf (2) angeordnet ist.

2. Brennkraftmaschine nach Anspruch 1,
**dadurch gekennzeichnet, dass** der Riemen (8) ein Keilrippenriemen ist.

3. Brennkraftmaschine nach einem oder mehreren der vorgenannten Ansprüche,
**dadurch gekennzeichnet, dass** die Lüfterkonsole (3) einen Lochstich aufweist.

4. Brennkraftmaschine nach einem oder mehreren der vorgenannten Ansprüche,
**dadurch gekennzeichnet, dass** die Lüfterkonsole (3) ein Montage-Spann-Werkzeug (9) aufweist.

5. Brennkraftmaschine nach Anspruch 4,
**dadurch gekennzeichnet, dass** das Montage-Spann-Werkzeug (9) abnehmbar ausgeführt ist.

6. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.

## Claims

1. An internal combustion engine comprising:
a cylinder crankcase (1);
a cylinder head (2);
at least one device for operating a fan, more specifically of a vehicle, more specifically of a utility vehicle, by means of which the fan is arranged so as to be displaceable relative to a crankshaft of the internal combustion engine,
wherein the device for operating a fan comprises a fan bracket (3) and a fan bearing (5); and
a belt drive, via which the fan can be operated, the belt drive having a first belt pulley and a second belt pulley, which are in a drive link pin via a belt (8), and the first belt pulley being arranged on the fan bearing (5),
**characterized in that** the fan bearing (5) is designed as a T-slot block which is arranged to be axially displaceable in a guide groove (6) which is arranged in the cylinder crankcase (1) and/or in the cylinder head (2).

2. The internal combustion engine according to claim 1,
**characterized in that** the belt (8) is a V-ribbed belt.

3. The internal combustion engine according to one or more of the preceding claims, **characterized in that** the fan bracket (3) has a hole pitch.

4. The internal combustion engine according to one or more of the preceding claims, **characterized in that** the fan bracket (3) has an installation clamping tool (9).

5. The internal combustion engine according to claim 4,
**characterized in that** the installation clamping tool (9) is designed such that it can be removed.

6. A method for operating an internal combustion engine,
**characterized in that** an internal combustion engine according to one or more of the preceding claims is being used.

## Revendications

1. Moteur à combustion interne, comprenant :
un carter-cylindres (1) ;
une culasse (2)
au moins un dispositif d'entraînement d'un ventilateur, notamment d'un véhicule, en particulier d'un véhicule utilitaire, par lequel le ventilateur est disposé de manière à pouvoir être déplacé par rapport à un vilebrequin du moteur à combustion interne,
dans lequel le dispositif d'entraînement d'un ventilateur comprend un support de ventilateur (3) et un palier de ventilateur (5) ; et
une transmission par courroie, par laquelle le ventilateur peut être entraîné, dans laquelle la transmission par courroie présente une première poulie et une deuxième poulie reliées par une courroie (8) en liaison d'entraînement, et la première poulie étant disposée sur le palier de ventilateur (5),
**caractérisé en ce que** le palier de ventilateur (5) est configuré comme un bloc de rainure en T, qui est situé de manière à pouvoir coulisser axialement dans une rainure de guidage (6), qui est disposée dans le carter-cylindres (1) et/ou la culasse (2).

2. Moteur à combustion interne selon la revendication 1,
**caractérisé en ce que** la courroie (8) est une courroie à nervure en V.

3. Moteur à combustion interne selon l'une ou plusieurs des revendications précédentes,
**caractérisé en ce que** le support de ventilateur (3) présente une perforation.

4. Moteur à combustion interne selon l'une ou plusieurs des revendications précédentes,
**caractérisé en ce que** le support de ventilateur (3) présente un outil de montage et de serrage (9).

5. Moteur à combustion interne selon la revendication 4,
**caractérisé en ce que** l'outil de montage et de serrage (9) est conçu de manière amovible.

6. Procédé de fonctionnement d'un moteur à combustion interne,
**caractérisé en ce qu'**un moteur à combustion interne selon l'une ou plusieurs des revendications précédentes est utilisé.
